# EUROPEAN PATENT SPECIFICATION

(11) **EP 0 530 885 B1**
(45) Date of publication and mention of the grant of the patent: **29.11.1995**
(21) Application number: 92202475.7
(22) Date of filing: 11.08.1992
(51) Int. Cl.: B62D 1/16, F16D 3/78

(54) **Intermediate shaft assembly for steering system**
Anordnung einer Zwischenwelle für Lenkungssystem
Disposition d'arbre intermédiaire pour système de direction

(30) Priority: 03.09.1991 US 752367
(43) Date of publication of application: 10.03.1993
(73) Proprietor: GENERAL MOTORS CORPORATION, Detroit Michigan 48202 (US)
(72) Inventor: Confer, Dale Edward, Bridgeport, MI 48722 (US)
(74) Representative: Denton, Michael John

(56) References cited:
- EP-A- 0 162 141
- DE-A- 2 424 906
- US-A- 3 267 696
- US-A- 4 509 775

## Description

This invention relates to intermediate shaft assemblies in automotive steering systems as specified in the preamble of claim 1, for example as disclosed in US-A-4,509,775.

In many automotive steering systems, a chassis-mounted steering gear is connected to a steering wheel on a steering column by a steering shaft in the column and by an intermediate shaft between the steering shaft and an input shaft of the steering gear. An intermediate shaft assembly described in US-A-4,509,775 includes universal joints at opposite ends of the assembly to accommodate non-alignment between the steering shaft and the steering gear input shaft, a vibration-isolating elastic coupling, and axial compliance for accommodating manufacturing tolerances and for installation purposes. An intermediate steering shaft assembly according to this invention is a novel alternative to the assembly described in the aforesaid US-A-4,509,775 and includes features contributing to compactness and manufacturing economy.

EP-A-0,162,141 discloses coupling means comprising an elastomeric ring, connecting means connecting the elastomeric ring to a centre shaft element, and connection means connecting the elastomeric ring to a second shaft element.

An intermediate shaft assembly according to the present invention is characterised by the features specified in the characterising portion of claim 1.

This invention is a new and improved intermediate shaft assembly for an automotive steering system. The intermediate shaft assembly according to this invention includes a first shaft element adapted for connection to a steering gear input shaft and a second shaft element adapted for connection to a steering shaft. The first shaft element is slidably received in a tubular centre shaft element of the intermediate shaft assembly and is connected to the latter for rotation as a unit therewith. A second shaft element is disposed around the centre shaft element and is connected to a planar elastic ring around the centre shaft element by a pair of attaching lugs of the second shaft element engaging the ring at diametrically-opposite locations on the latter. A second pair of attaching lugs is rigidly attached to the centre shaft element and engages the elastic ring at diametrically-opposite locations on the latter, spaced evenly between the first pair of attaching lugs, so that a vibration-isolating torque path is defined between the first and second shaft elements through the elastic ring. A bushing is disposed between the centre shaft element and the second shaft element and re-inforces the intermediate shaft assembly against beam-bending.

The invention and how it may be performed are hereinafter particularly described with reference to the accompanying drawings, in which:
Figure 1 is an exploded perspective view of an automotive steering system including an intermediate shaft assembly according to this invention;
Figure 2 is an enlarged, partially broken-away view of a portion of Figure 1 showing the intermediate shaft assembly according to this invention;
Figure 3 is a sectional view taken generally along the plane indicated by lines 3-3 in Figure 2;
Figure 4 is a sectional view taken generally along the plane indicated by lines 4-4 in Figure 2;
Figure 5 is a perspective view of the intermediate shaft assembly according to this invention depicted in Figures 1-4;
Figure 6 is similar to Figure 2 but showing a modified intermediate shaft assembly according to this invention; and
Figure 7 is a sectional view taken generally along the plane indicated by lines 7-7 in Figure 6.

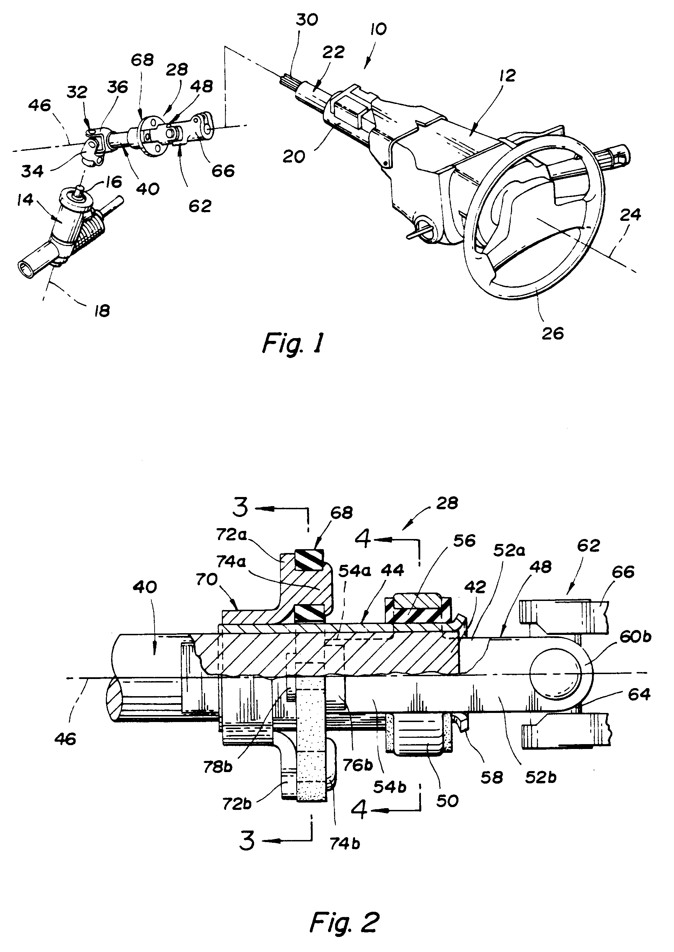

Referring to Figure 1, an automotive steering system 10 includes a steering column 12 adapted for support in a vehicle passenger compartment, not shown, and a rack and pinion steering gear 14 adapted for attachment to the vehicle outside the passenger compartment. The steering gear has an input shaft 16 aligned on an axis 18 of the steering gear. The steering column has a stationary mast jacket 20, a steering shaft 22 supported on the mast jacket for rotation about a centreline 24 of the steering column, and a steering wheel 26 rigidly attached to an upper end of the steering shaft for unitary rotation therewith. The axis 18 and the centreline 24 are neither axially nor angularly aligned. An intermediate shaft assembly 28 according to this invention is disposed between a lower end 30 of the steering shaft 22 and the input shaft 16 of the steering gear 14.

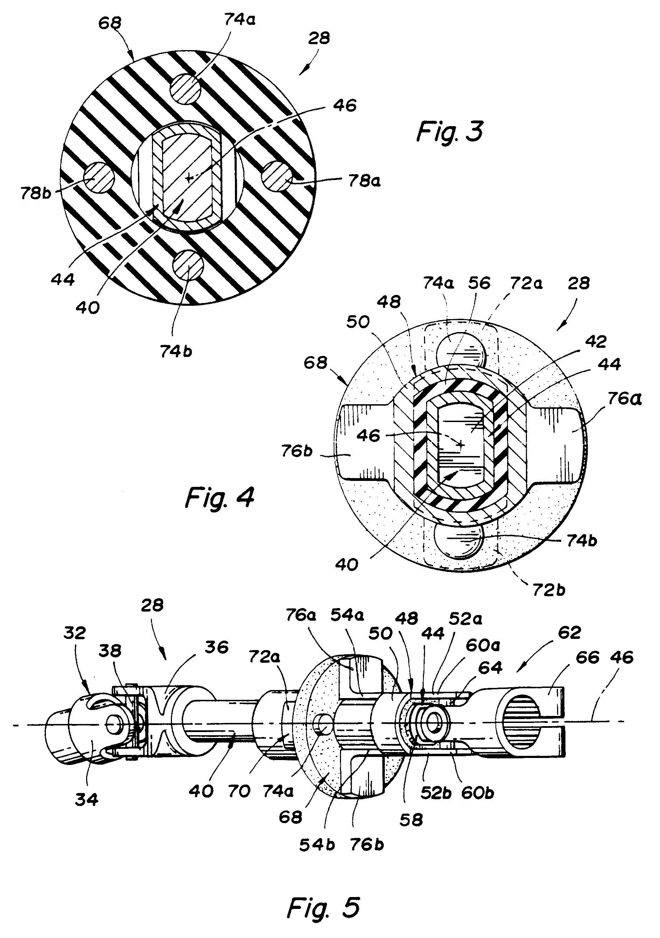

Referring to Figures 2-5, the intermediate shaft assembly 28 includes a first, lower universal joint 32 having an outboard yoke 34 adapted for rigid connection to the input shaft 16 of the steering gear, an inboard yoke 36, and a rigid spider 38 connecting the yokes in conventional fashion. The inboard yoke 36 is rigidly attached to a first shaft element 40 of the intermediate shaft assembly at a first end of the latter. The first shaft element is flattened into a non-circular, "Double-D" configuration, see Figure 3, along a substantial portion of the length of the shaft element from a second end 42 thereof toward the first end.

The intermediate shaft assembly 28 further includes a tubular centre shaft element 44 having a non-circular, "Double-D" configuration, see Figure 3, complimentary to the non-circular configuration of the first shaft element 40. The non-circular portion of the first shaft element 40 is slidably received in the centre shaft element 44 whereby the first and centre shaft elements are coupled for unitary rotation about a centreline 46 of the intermediate shaft assembly and for relative bodily-shiftable movement in the direction of the centreline 46.

As seen best in Figure 4, a second shaft element 48 of the intermediate shaft assembly 28 includes a tubular mid-section 50 around the centre shaft element having a non-circular, "Double-D" configuration complimentary to the configuration of the centre shaft element. The second shaft element further includes a first pair of arms 52a, 52b integral with the mid-section 50 and extending parallel to the centreline 46 in one direction from the mid-section 50 and a second pair of arms 54a, 54b integral with the mid-section 50 and extending parallel to the centreline 46 in the opposite direction from the mid-section 50. A "Double-D" shaped bushing 56 is disposed in the gap between the mid-section 50 of the second shaft element and the centre shaft element 44. The centre shaft element 44 has a flared end 58 behind the bushing 56 to define a retention tab.

The arms 52a, 52b terminate at respective ones of a pair of distal ends 60a, 60b which co-operate in defining an inboard yoke of a second, upper universal joint 62 of the intermediate shaft assembly 28. The upper universal joint 62 further includes a rigid spider 64 pivotally connected to the ends 60a, 60b and to an outboard yoke 66 of the universal joint adapted for rigid attachment to the lower end 30 of the steering shaft 22.

An elastomeric ring 68 is disposed around the centre shaft element 44 in a plane perpendicular to the centreline 46. A bracket 70 is welded or otherwise rigidly attached to the centre shaft element and includes a pair of diametrically-opposite radial lugs 72a, 72b parallel to the plane of the ring 68. The lugs 72a, 72b have respective ones of a pair of integral posts 74a, 74b thereon perpendicular to the plane of the ring. Each post is received in a corresponding hole in the ring 68 and headed over so that the ring is connected at diametrically-opposite locations thereon to the centre shaft element for rotation as a unit therewith.

The arms 54a, 54b on the second shaft element 48 terminate adjacent the ring 68 at respective ones of a pair of radial lugs 76a, 76b parallel to the ring 68 and angularly indexed from the lugs 72a, 72b on the bracket 70 by 90 degrees. The lugs 76a, 76b have respective ones of a pair of integral posts 78a, 78b hereon perpendicular to the plane of the ring. Each post is received in a corresponding hole in the ring 68 and headed over so that the ring is connected at diametrically-opposite locations thereon to the second shaft element for rotation as a unit therewith. The bushing 56 between the mid-section 50 and the centre shaft element 44 re-inforces the intermediate shaft assembly against beam-bending perpendicular to the centreline 46 and thereby prevents planar distortion of the ring 68.

In operation, a first torque path of the intermediate shaft assembly is defined between the first shaft element and the second shaft element through the ring 68. A second torque path of the intermediate shaft assembly is defined between the first shaft element and the second shaft element through the mid-section 50 of the second shaft element 48 and the bushing 56. The bushing 56 is less stiff than the ring 68 with respect to torque transfer between the center and second shaft elements 44, 48 so that the first torque path is the primary path whilst the second path assures redundancy in the event that the integrity of the first path is compromised. The torsional elasticity in both paths, however, isolates the steering wheel 26 from torsional vibrations emanating from the steering gear 14.

In the direction of the centreline 46, the sliding connection between the first shaft element 40 and the centre shaft element 44 affords longitudinal compliance which accommodates both installation of the intermediate shaft assembly between the steering gear 14 and the steering shaft 22 and vehicle-to-vehicle manufacturing variability. Furthermore, the flared end 58 on the centre shaft element 44 outboard of the bushing 56 defines a redundant longitudinal retainer for the second shaft element in the event that the integrity of the ring 68 is compromised.

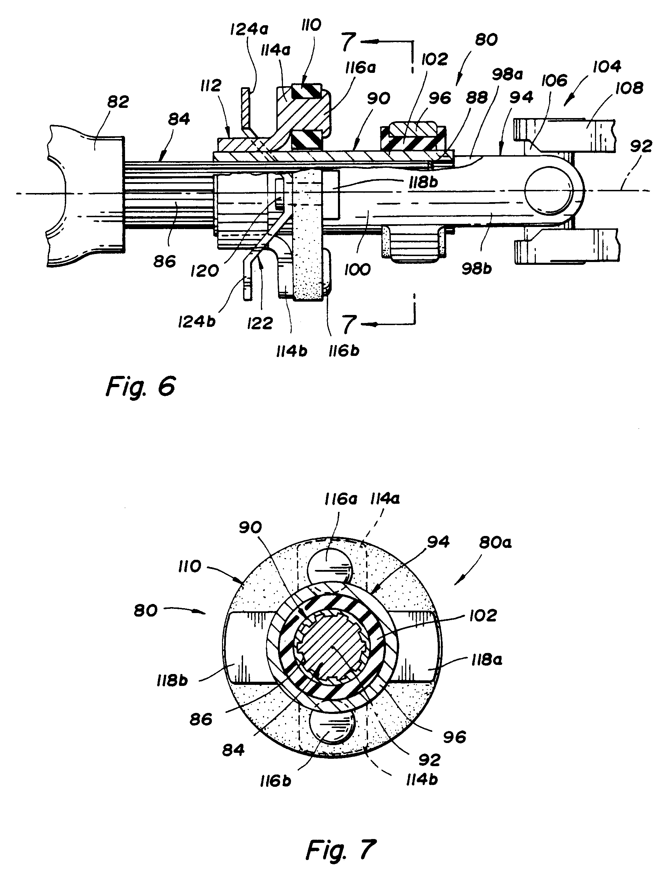

Referring to Figures 6-7, a modified intermediate shaft assembly 80 according to this invention includes an inboard yoke 82 on a first shaft element 84 at a first end of the latter. The first shaft element has a plurality of longitudinal outside splines 86 thereon along a substantial portion of the length of the shaft element extending from a second end 88 thereof towards the first end.

The intermediate shaft assembly 80 further includes a cylindrical tubular centre shaft element 90 having a plurality of longitudinal internal splines. The internal splines slidably receive the outside splines 86 on the first shaft element 84 whereby the first and centre shaft elements are coupled for unitary rotation about a centreline 92 of the intermediate shaft assembly and for relative bodily-shiftable movement in the direction of the centreline 92.

A second shaft element 94 of the intermediate shaft assembly 80 includes a cylindrical tubular mid-section 96 around the centre shaft element. The second shaft element further includes a first pair of arms 98a, 98b integral with the mid-section 96 and extending parallel to the centreline 92 in one direction from the mid-section 96 and a second pair of arms integral with the mid-section 96 and extending parallel to the centreline 92 in the opposite direction from the mid-section 96, only a single arm 100 being visible in Figure 6. An annular bushing 102 is disposed in the gap between the mid-section 96 of the second shaft element and the centre shaft element 90.

The arms 98a, 98b terminate at respective ones of a pair of distal ends which co-operate in defining an inboard yoke of a second, upper universal joint 104 of the intermediate shaft assembly 80. The upper universal joint 104 further includes a rigid spider 106 pivotally connected to the arms 98a, 98b and to an outboard yoke 108 adapted for rigid attachment to the lower end 30 of the steering shaft 22.

An elastomeric ring 110 is disposed around the centre shaft element 90 in a plane perpendicular to the centreline 92. A bracket 112 is welded or otherwise rigidly attached to the centre shaft element and includes a pair of diametrically-opposite radial lugs 114a, 114b parallel to the plane of the ring 110. The lugs 114a, 114b have respective ones of a pair of integral posts 116a, 116b thereon perpendicular to the plane of the ring. Each post is received in a corresponding hole in the ring 110 and headed over so that the ring is connected at diametrically-opposite locations thereon to the centre shaft element for rotation as a unit therewith.

The arms on the second shaft element 94 represented by the arm 100 terminate adjacent the ring 110 at respective ones of a pair of radial lugs 118a, 118b parallel to the ring 110 and angularly indexed from the lugs 114a, 114b on the bracket 112 by 90 degrees. The lugs 118a, 118b have respective ones of a pair of integral posts thereon perpendicular to the plane of the ring, only a portion of one post 120 being visible in Figure 6. Each post is received in a corresponding hole in the ring 110 and headed over so that the ring is connected at diametrically-opposite locations thereon to the second shaft element for rotation as a unit therewith. The bushing 102 between the mid-section 96 and the centre shaft element 90 re-inforces the intermediate shaft assembly against beam-bending perpendicular to the centreline 92 and thereby prevents planar distortion of the ring 110.

The modified intermediate shaft assembly 80 operates substantially as described above with respect to the intermediate shaft assembly 28. In addition, a retaining bracket 122 is connected to the lugs 118a,118b on the second shaft element 94 through the posts 120 thereon for rotation as a unit therewith. The retaining bracket 122 includes a pair of diametrically-opposite cage portions 124a, 124b which envelop the lugs 114a, 114b on the bracket 112. In the event that the integrity of the ring 110 is compromised, the retaining bracket 122 captures the lugs 114a,114b to prevent separation between the second shaft and centre shaft elements 94, 90 in the direction of the centreline 92 and to sustain torque transfer therebetween.

## Claims

1. An intermediate shaft assembly (28;80) comprising: a first shaft element (40;84) aligned on a longitudinal centreline (46;92) of said intermediate shaft assembly (28;80); a tubular centre shaft element (44;90); coupling means coupling said first shaft element (40;84) to said centre shaft element (44;90) for unitary rotation about said centreline (46;92) and for relative bodily-shiftable movement in the direction of said centreline (46;92); and coupling means coupling a second shaft element (48;94) to said centre shaft element (44;90) for unitary rotation about said centreline (46;92), characterised in that said second shaft element (48;94) has a tubular mid-section (50;96) around said centre shaft element (44;90); and said coupling means coupling said second shaft element (48;94) comprises an elastomeric ring (68;110) around said centre shaft element (44;90) in a plane perpendicular to said centreline (46;92); connecting means (72a,72b,74a,74b;114a,114b;116a;116b) connecting said elastomeric ring (68;110) at a first plurality of diametrically-opposite locations thereon to said centre shaft element (44;90) for rotation as a unit with said centre shaft element (44;90) about said centreline (46;92); connection means (76a,76b,78a,78b;118a, 118b,120) connecting said elastomeric ring (68;110) at a second plurality of diametrically-opposite locations thereon, angularly indexed from said first plurality of diametrically-opposite locations, to said second shaft element (48;94) for rotation as unit with said second shaft element (48;94) about said centreline (46;92); and elastomeric bushing means (56;102) between said mid-section (50;96) of said second shaft element (48;94) and said centre shaft element (44;90) re-inforcing said intermediate shaft assembly (28;80) against beam-bending in a direction perpendicular to said centreline (46;92) to prevent planar distortion of said elastomeric ring (68;110).

2. An intermediate shaft assembly (80) according to claim 1, in which said means coupling said first shaft element (84) to said centre shaft element (90) for unitary rotation about said centreline (92) and for relative bodily-shiftable movement in the direction of said centreline (92) includes: a plurality of outside longitudinal splines (86) on said first shaft element (84), and a corresponding plurality of internal splines on said centre shaft element (90) slidably meshing with said outside longitudinal splines (86).

3. An intermediate shaft assembly (28) according to claim 1, in which said means coupling said first shaft element (40) to said centre shaft element (44) for unitary rotation about said centreline (46) and for relative bodily-shiftable movement in the direction of said centreline (46) includes: means on said first shaft element (40) defining an elongated portion thereof having at least one flat side parallel to said centreline (46), and means on said centre shaft element (44) defining a tubular portion thereof having a configuration complimentary to said elongated portion of said first shaft element (40) and slidably receiving therein said elongated portion of said first shaft element (40).

4. An intermediate shaft assembly (80) according to claim 1, in which said means connecting said elastomeric ring (68) at a first plurality of diametrically-opposite locations thereon to said centre shaft element (44) for rotation as a unit with said centre shaft element (44) about said centreline (46) includes a pair of rigid radial lugs (72a,72b) on said centre shaft element (44) parallel to said plane of said elastomeric ring (68), a first pair of holes in said elastomeric ring (68) at said first diametrically-opposite locations thereon, and a pair of integral posts (74a,74b) on respective ones of said radial lugs (72a,72b) on said centre shaft element (44) perpendicular to said elastomeric ring (68) and received in respective ones of said first pair of holes in said elastomeric ring (68); and said means connecting said elastomeric ring (68) at a second plurality of diametrically-opposite locations thereon angularly indexed from said first plurality of diametrically-opposite locations to said second shaft element (48) for rotation as a unit with said second shaft element (48) about said centreline (46) includes a pair of rigid radial lugs (76a;76b) on said second shaft element (48) parallel to said elastomeric ring (68), a second pair of holes in said elastomeric ring (68) at said second diametrically-opposite locations thereon angularly indexed from said first pair of holes in said elastomeric ring (68), and a pair of integral posts (78a,78b) on respective ones of said radial lugs (76a,76b) on said second shaft element (48) perpendicular to said elastomeric ring (68) and received in respective ones of said second pair of holes in said elastomeric ring (68).

5. An intermediate shaft assembly (80) according to claim 3, in which there is a secondary coupling between said second shaft element (48) and said centre shaft element (44) operative to transfer torque from said second shaft element (48) to said centre shaft element (44) independently of said elastomeric ring (68).

6. An intermediate shaft assembly (80) according to claim 5, in which said secondary coupling between said second shaft element (48) and said centre shaft element (44) includes means on said centre shaft element (44) defining a portion thereof having a configuration in transverse section including a flat side, and means on said mid-section (50) of said second shaft element (48) defining a tubular portion having a configuration in transverse section complimentary to said configuration of said portion of said centre shaft element having said flat side, said bushing means (56) being disposed between said portion of said centre shaft element (44) having said flat side and said tubular portion of said mid-section (50) having said flat side.

7. An intermediate shaft assembly (80) according to claim 6, in which a radially outwardly-flared portion (58) on said centre shaft element (44) is positioned longitudinally outwards of said bushing means (56) between said portions of said centre shaft element (44) and said mid-section (50) having said flat side, and is operative to prevent separation of said centre shaft element (44) from said second shaft element (48) in the direction of said centreline (46).

## Patentansprüche

1. Eine Zwischenwellenanordnung (28; 80) mit: einem ersten Wellenelement (40; 84), das auf einer longitudinalen Mittellinie (46; 92) der Zwischenwellenanordnung (28; 80) ausgerichtet ist; einem rohrförmigen Mittelwellenelement (44; 90); Kupplungsmitteln, die das erste Wellenelement (40; 84) an das Mittelwellenelement (44; 90) für eine einheitliche Drehung um die Mittellinie (46; 92) herum und für eine relative körperlich verschiebbare Bewegung in der Richtung der Mittellinie (46; 92) kuppeln; und Kupplungsmitteln, die ein zweites Wellenelement (48; 94) an das Mittelwellenelement (44; 90) für eine einheitliche Drehung um die Mittellinie (46; 92) herum kuppeln, dadurch **gekennzeichnet**, daß
das zweite Wellenelement (48; 94) einen rohrförmigen Mittenabschnitt (50; 96) um das Mittelwellenelement (44; 90) herum aufweist; und das Kupplungmittel, das das zweite Wellenelement (48; 94) kuppelt, umfaßt einen elastomerischen Ring (68; 110) um das Mittelwellenelement (44; 90) herum in einer Ebene senkrecht zu der Mittellinie (46; 92); Verbindungsmittel (72a, 72b, 74a, 74b; 114a, 114b; 116a; 116b), die den elastomerischen Ring (68; 110) an einer ersten Vielzahl von diametral gegenüberliegenden Stellen darauf mit dem Mittelwellenelement (44; 90) für eine Drehung als eine Einheit mit dem Mittelwellenelement (44; 90) um die Mittellinie (46; 92) herum verbinden; Verbindungsmittel (76a, 76b, 78a, 78b; 118a, 118b, 120), die den elastomerischen Ring (68; 110) an einer zweiten Vielzahl von diametral gegenüberliegenden Stellen darauf, die winkelmäßig versetzt von der ersten Vielzahl von diametral gegenüberliegenden Stellen angeordnet sind, mit dem zweiten Wellenelement (48; 94) für eine Drehung als eine Einheit mit dem zweiten Wellenelement (48; 94) um die Mittellinie (46; 92) herum verbinden; und elastomerische Büchsenmittel (56; 102) zwischen dem Mittenabschnitt (50; 96) des zweiten Wellenelements (48; 94) und dem Mittelwellenelement (44; 90), die die Zwischenwellenanordnung (28; 80) gegen Balkenbiegung in einer Richtung senkrecht zu der Mittellinie (46; 92) verstärken, um eine planare Verspannung des elastomerischen Rings (68; 110) zu verhindern.

2. Eine Zwischenwellenanordnung (80) nach Anspruch 1, in der das Mittel, das das erste Wellenelement (84) an das Mittelwellenelement (90) für eine einheitliche Drehung um die Mittellinie (92) herum und für eine relative körperlich verschiebbare Bewegung in der Richtung der Mittellinie (92) kuppelt, umfaßt: eine Vielzahl von äußeren longitudinalen Keilnuten (86) auf dem ersten Wellenelement (84) und eine entsprechende Vielzahl von internen Keilnuten auf dem Mittelwellenelement (90), die gleitbar mit den äußeren longitudinalen Keilnuten (86) in Eingriff stehen.

3. Eine Zwischenwellenanordnung (28) nach Anspruch 1, in der das Mittel, das das erste Wellenelement (40) an das Mittelwellenelement (44) für eine einheitliche Drehung um die Mittellinie (46) herum und für eine relative körperlich verschiebbare Bewegung in der Richtung der Mittellinie (46) kuppelt, umfaßt: Mittel auf dem ersten Wellenelement (40), die einen länglichen Teil davon definieren mit wenigstens einer flachen Seite parallel zu der Mittellinie (46), und Mittel auf dem Mittelwellenelement (44), die einen rohrförmigen Teil davon definieren mit einer Konfiguration komplementär zu dem länglichen Teil des ersten Wellenelements (40), und die darin gleitbar den länglichen Teil des ersten Wellenelements (40) aufnehmen.

4. Eine Zwischenwellenanordnung (80) nach Anspruch 1, in der das Mittel, das den elastomerischen Ring (68) an einer ersten Vielzahl von diametral gegenüberliegenden Stellen darauf mit dem Mittelwellenelement (44) für eine Drehung als eine Einheit mit dem Mittelwellenelement (44) um die Mittellinie (46) herum verbindet, umfaßt ein Paar starrer radialer Ansätze (72a, 72b) auf dem Mittelwellenelement (44) parallel zu der Ebene des elastomerischen Ringes (68), ein erstes Paar Löcher in dem elastomerischen Ring (68) an den ersten diametral gegenüberliegenden Stellen darauf und ein integrales Pfostenpaar (74a, 74b) auf jeweiligen Ansätzen der radialen Ansätze (72a, 72b) auf dem Mittelwellenelement (44) senkrecht zu dem elastomerischen Ring (68) und aufgenommen in jeweiligen Löchern des ersten Paares Löcher in dem elastomerischen Ring (68); und das Mittel, das den elastomerischen Ring (68) an einer zweiten Vielzahl von diametral gegenüberliegenden Stellen darauf, die winkelmäßig versetzt von der ersten Vielzahl von diametral gegenüberliegenden Stellen angeordnet sind, mit dem zweiten Wellenelement (48) für eine Drehung als eine Einheit mit dem zweiten Wellenelement (48) um die Mittellinie (46) herum verbindet, umfaßt ein Paar starrer radialer Ansätze (76a; 76b) auf dem zweiten Wellenelement (48) parallel zu dem elastomerischen Ring (68), ein zweites Paar Löcher in dem elastomerischen Ring (68) an den zweiten diametral gegenüberliegenden Stellen darauf, die winkelmäßig versetzt von dem ersten Paar Löcher in dem elastomerischen Ring (68) angeordnet sind und ein integrales Pfostenpaar (78a, 78b) auf jeweiligen Ansätzen von den radialen Ansätzen (76a, 76b) auf dem zweiten Wellenelement (48) senkrecht zu dem elastomerischen Ring (68) und aufgenommen in jeweiligen Löchern des zweiten Lochpaares in dem elastomerischen Ring (68).

5. Eine Zwischenwellenanordnung (80) nach Anspruch 3, in der es eine zweite Kupplung zwischen dem zweiten Wellenelement (48) und dem Mittelwellenelement (44) gibt, die betreibbar ist, um Drehmoment von dem zweiten Wellenelement (48) zu dem Mittelwellenelement (44) unabhängig von dem elastomerischen Ring (68) zu transferieren.

6. Eine Zwischenwellenanordnung (80) nach Anspruch 5, in der die sekundäre Kupplung zwischen dem zweiten Wellenelement (48) und dem Mittelwellenelement (44) umfaßt Mittel auf dem Mittelwellenelement (44), die davon einen Teil definieren mit einer Transversalschnittkonfiguration mit einer flachen Seite, und Mittel auf dem Mittenabschnitt (50) des zweiten Wellenelements (48), die einen rohrförmigen Teil definieren mit einer Transversalschnittkonfiguration komplementär zu der Konfiguration des Teils des Mittelwellenelements mit der flachen Seite, wobei die Büchsenmittel (56) zwischen dem Teil des Mittelwellenelements (44) mit der flachen Seite und dem rohrförmigen Teil des Mittenabschnitts (50) mit der flachen Seite angeordnet sind.

7. Eine Zwischenwellenanordnung (80) nach Anspruch 6, in der ein radial nach außen erweiterter Teil (58) auf dem Mittelwellenelement (44) longitudinal nach außen von den Büchsenmitteln (56) zwischen den Teilen des Mittelwellenelements (44) und dem Mittenabschnitt (50) mit der flachen Seite positioniert und betreibbar ist, um eine Trennung des Mittelwellenelements (44) von dem zweiten Wellenelement (48) in der Richtung der Mittellinie (46) zu verhindern.

## Revendications

1. Ensemble d'arbre intermédiaire (28; 80) comprenant: un premier élément d'arbre (40; 84) aligné suivant une ligne d'axe longitudinale (46; 92) de l'ensemble d'arbre intermédiaire (28; 80); un élément d'arbre central tubulaire (44; 90); un moyen d'accouplement dudit premier élément d'arbre (40; 84) audit élément d'arbre central (44; 90) de façon à tourner comme un ensemble autour de ladite ligne d'axe centrale (46; 92) et à présenter un déplacement relatif coulissant globalement dans le sens de ladite ligne d'axe centrale (46; 92); et un moyen d'accouplement couplant un second élément d'arbre (48; 94) audit élément d'arbre central (44; 90) de façon à tourner comme un ensemble autour de ladite ligne d'axe centrale (46; 92), caractérisé en ce que ledit second élément d'arbre (48; 94) dispose d'une section médiane tubulaire (50; 96) autour dudit élément d'arbre central (44; 90); et ledit moyen d'accouplement couplant ledit second élément d'arbre (48; 94) comprend un anneau en élastomère (68; 110) disposé autour dudit élément d'arbre central (44; 90) dans un plan perpendiculaire à ladite ligne d'axe centrale (46; 92); des moyens de liaison (72a, 72b, 74a, 74b; 114a, 114b; 116a, 116b) reliant ledit anneau en élastomère (68; 110), à plusieurs emplacements diamétralement opposés de celui-ci, audit élément d'arbre central (44; 90) de façon à tourner comme un ensemble avec ledit élément d'arbre central (44; 90) autour de ladite ligne d'axe centrale (46; 92); des moyens de liaison (76a, 76b, 78a, 78b; 118a, 118b, 120) reliant ledit anneau en élastomère (68; 110) à plusieurs emplacements diamétralement opposés de celui-ci, indexés angulairement par rapport à ladite première pluralité d'emplacements diamétralement opposés, audit second élément d'arbre (48; 94) de façon à tourner comme un ensemble avec ledit second élément d'arbre (48; 94) autour de ladite ligne d'axe centrale (46; 92); et un moyen formant douille en élastomère (56; 102) situé entre ladite section médiane (50; 96) dudit second élément d'arbre (48; 94) et ledit élément d'arbre central (44; 90) renforçant ledit ensemble d'arbre intermédiaire (28; 80) par rapport au cintrage dans un sens perpendiculaire à ladite ligne d'axe centrale (46; 92) pour empêcher la distorsion dans le plan dudit anneau en élastomère (68; 110).

2. Ensemble d'arbre intermédiaire (80) selon la revendication 1, dans lequel ledit moyen d'accouplement couplant ledit premier élément d'arbre (84) audit élément d'arbre central (90) de façon qu'ils tournent comme un ensemble autour de ladite ligne d'axe centrale (92) et qu'ils présentent un déplacement relatif coulissant globalement dans le sens de ladite ligne d'axe centrale (92) comporte: une pluralité de cannelures longitudinales externes (86) agencées sur ledit premier élément d'arbre (84), et une pluralité correspondante de cannelures internes agencées sur ledit élément d'arbre central (90) coulissant de façon engrenée dans lesdites cannelures longitudinales externes (86).

3. Ensemble d'arbre intermédiaire (28) selon la revendication 1, dans lequel ledit moyen d'accouplement couplant ledit premier élément d'arbre (40) audit élément d'arbre central (44) de façon qu'ils tournent comme un ensemble autour de ladite ligne d'axe centrale (46) et qu'ils présentent un déplacement relatif coulissant globalement dans le sens de ladite ligne d'axe centrale (46) comporte: un moyen agencé sur ledit premier élément d'arbre (40), définissant une partie allongée de celui-ci, disposant d'au moins un côté plat parallèle à ladite ligne d'axe centrale (46), et un moyen agencé sur ledit élément d'arbre central (44), définissant une partie tubulaire de celui-ci, présentant une configuration complémentaire à celle de ladite partie allongée dudit premier élément d'arbre (40) et recevant à l'intérieur, de façon coulissante ladite partie allongée dudit premier élément d'arbre (40).

4. Ensemble d'arbre intermédiaire (80) selon la revendication 1, dans lequel ledit moyen de liaison dudit anneau en élastomère (68), à une première pluralité d'emplacements diamétralement opposés de celui-ci, audit élément d'arbre central (44) de façon qu'il tourne comme un ensemble avec ledit élément d'arbre central (44) autour de ladite ligne d'axe centrale (46) comporte une paire d'oreilles rigides radiales (72a, 72b) agencées sur ledit élément d'arbre central (44) parallèles audit plan dudit anneau en élastomère (68), une première paire d'orifices dans ledit élément en élastomère (68) auxdits premiers emplacements diamétralement opposés de celui-ci, et une paire de broches (74a, 74b) agencées sur les oreilles respectives desdites oreilles radiales (72a, 72b) sur ledit élément d'arbre central (44), faisant partie intégrante de celles-ci, perpendiculaires audit anneau en élastomère (68) et reçues dans les orifices respectifs de ladite première paire d'orifices dudit anneau en élastomère (68); et ledit moyen de liaison dudit anneau en élastomère (68), à une seconde pluralité d'emplacements diamétralement opposés de celui-ci, indexés angulairement par rapport à ladite première pluralité d'emplacements diamétralement opposés, audit second élément d'arbre (48) de façon qu'il tourne comme un ensemble avec ledit second élément d'arbre (48) autour de ladite ligne d'axe centrale (46) comporte une paire d'oreilles radiales rigides (76a; 76b) agencées sur ledit second élément d'arbre (48) parallèles audit anneau en élastomère (68), une seconde paire d'orifices dudit anneau en élastomère (68) auxdits seconds emplacements diamétralement opposés de celui-ci, indexés angulairement par rapport à ladite première paire d'orifices dudit anneau en élastomère (68), et une paire de broches (78a, 78b) agencées sur les oreilles respectives desdites oreilles radiales (76a, 76b) sur ledit second élément d'arbre (48), faisant partie intégrante de celles-ci, perpendiculaires audit anneau en élastomère (68) et reçues dans les orifices respectifs de ladite seconde paire d'orifices dans ledit anneau en élastomère (68).

5. Ensemble d'arbre intermédiaire (80) selon la revendication 3, dans lequel un accouplement secondaire est prévu entre ledit second élément d'arbre (48) et ledit élément d'arbre central (44), fonctionnant de façon à transférer le couple dudit second élément d'arbre (48) vers ledit élément d'arbre central (44) indépendamment dudit anneau en élastomère (68).

6. Ensemble d'arbre intermédiaire (80) selon la revendication 5, dans lequel ledit accouplement secondaire entre ledit second élément d'arbre (48) et ledit élément d'arbre central (44) comporte un moyen agencé sur ledit élément d'arbre central (44), définissant une partie de celui-ci, présentant une configuration en section transversale comportant un côté plat, et un moyen sur ladite section médiane (50) dudit second élément d'arbre (48), définissant une partie tubulaire présentant une configuration en section transversale complémentaire à ladite configuration de ladite partie dudit élément d'arbre central pourvu dudit côté plat, ledit moyen formant douille (56) étant disposé entre ladite partie dudit élément d'arbre central (44) pourvu dudit côté plat et ladite partie tubulaire de ladite section médiane (50) pourvu dudit côté plat.

7. Ensemble d'arbre intermédiaire (80) selon la revendication 6, dans lequel une partie évasée radialement vers l'extérieur (58) dudit élément d'arbre central (44) est disposée longitudinalement vers l'extérieur dudit moyen formant douille (56) entre lesdites parties dudit élément d'arbre central (44) et de ladite section médiane (50) qui sont pourvus dudit côté plat, et agit de façon à empêcher la séparation dudit élément d'arbre central (44) dudit second élément d'arbre (48) dans le sens de ladite ligne d'axe centrale (46).
